# FASCICULE DE BREVET EUROPEEN

(11) **EP 2 856 271 B1**
(45) Date de publication et mention de la délivrance du brevet: **30.10.2019**
(21) Numéro de dépôt: 13729994.7
(22) Date de dépôt: 27.05.2013
(51) Int. Cl.: G05B 23/02

(54) **SYSTEME ET METHODE DE TRAITEMENT D'INFORMATIONS POUR LA SURVEILLANCE D'UN SYSTEME COMPLEXE**
INFORMATIONSVERARBEITUNGSSYSTEM UND VERFAHREN ZUR ÜBERWACHUNG EINES KOMPLEXEN SYSTEMS
INFORMATION PROCESSING SYSTEM AND METHOD FOR MONITORING A COMPLEX SYSTEM

(30) Priorité: 28.05.2012 FR 1254901
(43) Date de publication de la demande: 08.04.2015
(73) Titulaire: Safran Aircraft Engines, 75015 Paris (FR)
(72) Inventeur: LE GONIDEC, Serge, F-27200 Vernon (FR); MALIKOV, Dimitri, F-75018 Paris (FR); BERECHET, Ion, F-94300 Vincennes (FR); BERECHET, Stefan, F-94340 Joinville le Pont (FR)
(74) Mandataire: Delumeau, François Guy
(86) Numéro de dépôt international: PCT/FR2013/051168
(87) Numéro de publication internationale: WO 2013/178922

(56) Documents cités:
- WO-A1-2011/104466
- US-A1- 2005 210 337
- US-A1- 2009 037 772
- US-B1- 6 757 668

## Description

### Domaine technique et état de l'art

L'invention s'inscrit dans le domaine des systèmes et méthodes de détection et d'analyse de signaux de pannes dans un système complexe, comme par exemple un moteur de fusée.

Dans ce domaine, des indicateurs de défaut, aussi appelés « drapeaux » ou, en anglais, « flags » sont activés quand un capteur ou un ensemble de capteurs placés à un endroit donné du système complexe et mesurant une ou plusieurs grandeurs physiques détecte, après un éventuel traitement des données mesurées, une variation par rapport à une valeur de référence.

Ces indicateurs de défaut peuvent indiquer une suspicion de défaut (ou panne) relative à un composant, un sous-système, un système complet ou parfois, un capteur. On sait associer les indicateurs de défaut ou des ensembles d'indicateurs de défaut à des pannes, qui sont des diagnostics pour la prise de décision pour une action (humaine ou automatisée). Ainsi, à titre d'exemple dans un moteur de fusée, un indicateur de défaut peut porter sur un niveau vibratoire d'une turbine élevé, et un deuxième indicateur de défaut sur un rendement de turbine faible. Dans ce cas, une panne associée à la combinaison des deux indicateurs peut être une perte d'une aube de la turbine. Le lien entre les indicateurs de défaut et les pannes est établi à l'aide de matrices agencées conformément à l'arborescence du système, qui peuvent être développées sous-système par sous-système.

Le document WO 2011/104466 divulgue de plus d'associer à chaque indicateur de défaut un niveau de confiance, et de générer, à partir de messages de pannes bruts reçus, un ou plusieurs messages consolidés incluant un niveau de confiance, en fusionnant les informations des messages de pannes bruts, que ces messages soient associés à des pannes des composants, de sous-systèmes, du système complet ou de capteurs.

Une telle fusion d'indicateurs de défaut est de haut niveau décisionnel. Les indicateurs à fusionner peuvent constituer des informations redondantes, complémentaires, concordantes ou discordantes, symboliques ou numériques, et ils disposent d'un niveau de confiance matérialisant leurs imperfections (imprécisions, incertitudes, caractère incomplet).

La fusion peut être mise en oeuvre dans une architecture centralisée ou distribuée, ou encore une architecture hiérarchique. Des fonctions centralisées peuvent cohabiter avec des fonctions distribuées.

Le document US 2005/0210337 décrit une méthode de validation de capteurs et d'analyse de défauts d'un processus.

### Résumé de l'invention

L'invention propose de mettre en oeuvre cette fusion par des méthodes symboliques issues de l'intelligence artificielle. Précisément, il est proposé un système de traitement de données pour la surveillance d'un système complexe, suivant la revendication 1.

Conformément à l'invention il est aussi proposé une méthode de traitement de données pour la surveillance d'un système complexe suivant la revendication 9.

### Brève description des figures

L'invention va maintenant être décrite en relations avec les figures suivantes.
La figure 1 représente un schéma général de mise en oeuvre de l'invention.
Les figures 2 à 4 présentent des détails de la représentation de la figure 1.
La figure 5 représente un exemple particulier d'application de l'invention.
La figure 6 présente un deuxième moyen mis en oeuvre dans certains modes de réalisation de l'invention.
La figure 7 présente un troisième moyen mis en oeuvre dans certains modes de réalisation de l'invention.
La figure 8 présente un premier aspect particulier, à savoir l'étape de fuzzyfication, d'un mode de réalisation de l'invention.
Les figures 9 à 11 représentent chacune un aspect correspondant d'un autre mode de réalisation.
La figure 12 représente un deuxième aspect particulier, à savoir l'application des règles de fusion, d'un mode de réalisation de l'invention.
Les figures 13 à 15 représentent chacune un aspect correspondant d'un autre mode de réalisation.
La figure 16 représente un troisième aspect particulier, à savoir la défuzzyfication, dans deux modes de réalisation de l'invention.

### Description détaillée de l'invention

On va maintenant décrire en détails certains aspects de l'invention.

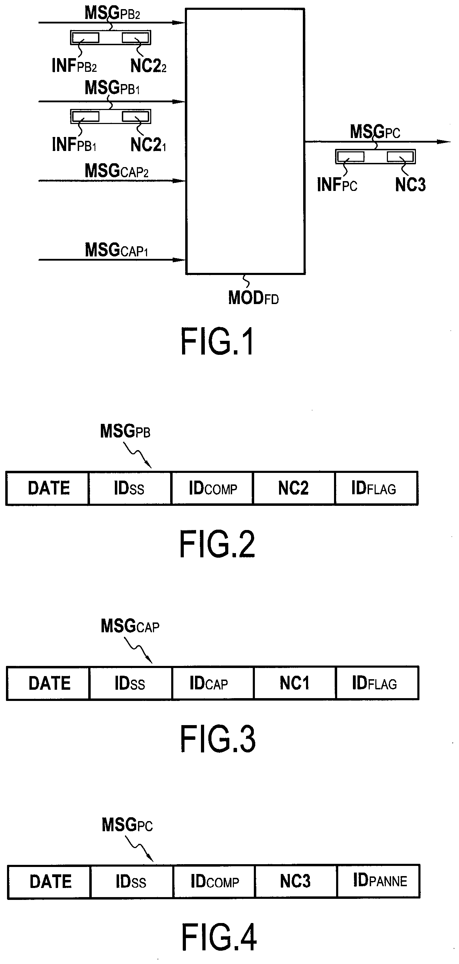

En **figure 1****,** on a représenté un module de fusion de données MOD_{FD}. Il reçoit en entrée un ou plusieurs messages d'état (correspondant aux messages de pannes bruts décrits dans WO2011/104466), ici au nombre de deux et référencés MSG_{PB1} et MSG_{PB2}. Chacun de ces messages comprend une information d'état INF_{PB} et un niveau de confiance NC2 (le chiffre 2 indique ici qu'il s'agit d'un niveau de confiance déjà partiellement consolidé, dérivé d'une manière ou d'une autre d'un niveau de confiance primitif). Les références INF_{PB} et NC2 sont, sur la figure 1, suivies d'un indice renvoyant au numéro du message d'état auquel ils sont rattachés.

Le module de fusion de données MOD_{FD} reçoit également des messages relatifs à l'état de capteurs MSG_{CAP}, ici au nombre de deux et référencés MSG_{CAP1} et MSG_{CAP2} a chacun desquels est associé un niveau de confiance NC1.

Dans certaines situations simples, les nombres de messages de panne de capteur et de messages d'état sont identiques et chaque message de panne de capteur est associé à un message d'état déclenché par un processus impliquant le capteur dont l'état de panne est signalé par le message de panne de capteur.

Le module MOD_{FD} produit en sortie un message de panne consolidé comprenant une information de panne consolidée INF_{PC} et un niveau de confiance consolidé NC3, l'indice 3 indiquant une étape de consolidation supplémentaire par rapport au niveau de confiance NC2.

Dans certaines situations simples, le module MOD_{FD} produit un unique message MSG_{PC}, mais il pourrait en produire plusieurs, de préférence en nombre plus faible qu'il ne reçoit de messages d'état MSG_{PB} en entrée.

La structure d'un message MSG_{PB} est présentée en **figure 2****.** Un tel message contient, par exemple de manière séquentielle, une date, un identifiant de sous-système ID_{SS}, un identifiant de composant ID_{COMP}, la panne étant indiquée par le message comme relative au sous-système référencé ou au composant référencé, un niveau de confiance NC2 tel qu'évoqué plus haut et un identifiant d'indicateur de défaut ID_{FLAG}. Les identifiants ID_{SS}, ID_{COMP} et ID_{FLAG} sont choisis en fonction d'une convention prédéterminée. Les informations DATE, ID_{SS}, ID_{COMP} et ID_{FLAG} constituent l'information INF_{PB}.

La structure d'un message MSG_{CAP} est présentée en **figure 3****.** Un tel message contient, par exemple de manière séquentielle, une date, un identifiant de sous-système ID_{SS}, un identifiant de capteur ID_{CAP}, un niveau de confiance NC1 (le chiffre 1 indiquant ici qu'il s'agit d'une valeur primitive, mais il pourrait s'agit d'une valeur partiellement consolidée d'une manière ou d'une autre), et un identifiant d'indicateur de défaut ID_{FLAG}. L'identifiant ID_{CAP} est choisi en fonction d'une convention prédéterminée.

La structure d'un message MSG_{PC} est présentée en **figure 4****.** Un tel message contient, par exemple de manière séquentielle, une date, un identifiant de sous-système ID_{SS}, un identifiant de composant ID_{COMP}, le niveau de confiance déjà évoqué, et un identifiant de panne ID_{PANNE}. Les identifiants ID_{SS}, ID_{COMP} et ID_{PANNE} sont choisis en fonction d'une convention prédéterminée. Les informations DATE, ID_{SS}, ID_{COMP} et ID_{PANNE} constituent l'information INF_{PC}.

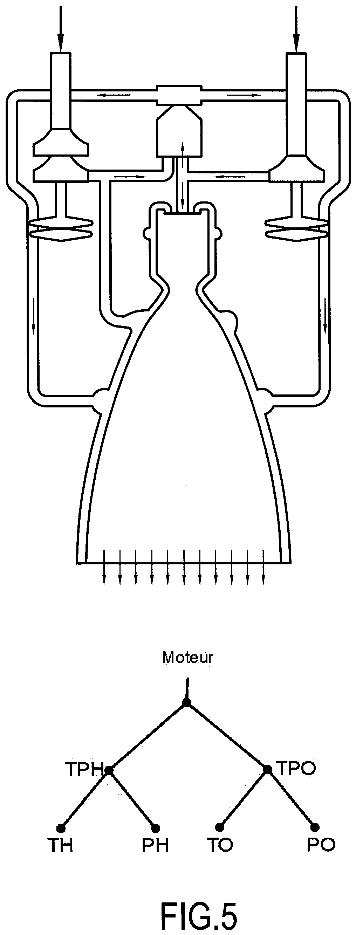

En **figure 5** on a représenté un cas concret de système complexe surveillé par différents capteurs pour détecter et diagnostiquer des pannes. Il s'agit d'un moteur de fusée fonctionnant à l'oxygène et à l'hydrogène liquides et produisant des gaz chauds. Des capteurs surveillent la turbine à hydrogène TH, la pompe à hydrogène PH, la turbine à oxygène TO et la pompe à oxygène PO. Des fonctions de calcul et de traitement de l'information génèrent des messages d'état et des messages de panne de capteur. Les messages d'état en provenance de la turbine à hydrogène et de la pompe à hydrogène font l'objet d'une fusion dans un module MOD_{FD} pour former un message consolidé relatif à l'ensemble Turbine et Pompe à Hydrogène TPH. Parallèlement, les messages d'état en provenance de la turbine à oxygène et de la pompe à oxygène font l'objet d'une fusion dans un module MOD_{FD} pour former un message consolidé relatif à l'ensemble turbine et pompe à oxygène TPO. Ensuite, les messages consolidés en provenance de l'ensemble TPH et de l'ensemble TPO font l'objet d'une autre fusion dans un module MOD_{FD} pour former un message consolidé relatif à l'ensemble du moteur.

L'activation des indicateurs de défaut peut se faire sur plusieurs niveaux d'intensité, de manière exacte ou de manière floue, comme cela est présenté dans les deux tableaux suivants, présentant successivement un indicateur activé de manière exacte et un indicateur activé de manière floue.

| Intensité 2 "Défaillance grave" avec niveau de confiance = 0.7 | | | | | | |
|---|---|---|---|---|---|---|
| "2" | « Défaillance grave » | 0 | 0 | 0 | 0.7 | 0 |

| Intensité 2 avec niveau de confiance= 0.7 | | | | | | |
|---|---|---|---|---|---|---|
| & Intensité 3 avec niveau de confiance = 0.3 | | | | | | |
| "2" | « Défaillance grave » | 0 | 0 | 0 | 0.7 | 0 |
| "3" | « Panne » | 0 | 0 | 0 | 0 | 0.3 |

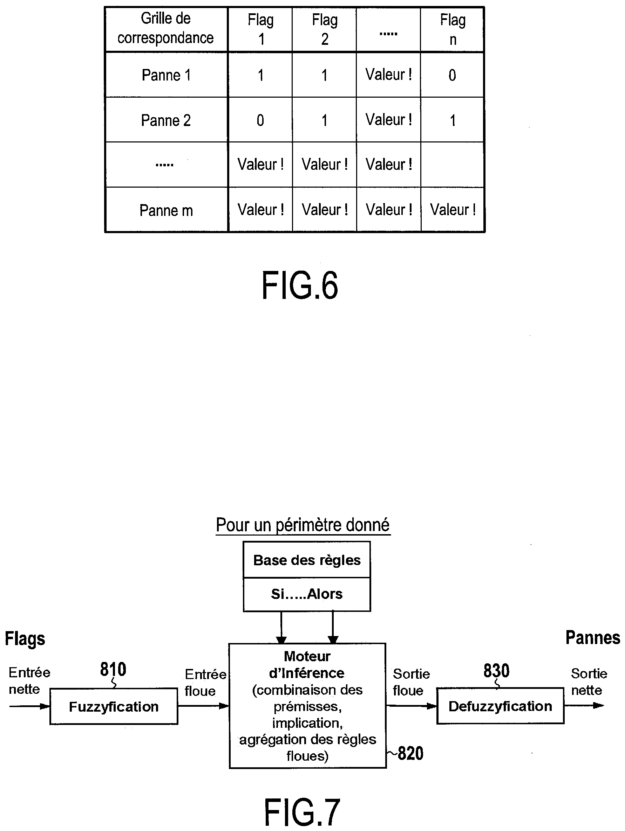

La **figure 6** présente une grille de correspondance G_{CRP} utilisée aussi dans le module MOD_{FD}. La grille G_{CRP} associe des couples constitués d'une ou plusieurs pannes et d'un ou plusieurs indicateurs d'état (Flags). Pour obtenir une information de panne, on fusionne les indicateurs d'état indiqués dans la grille en regard de la panne, pondérés par le coefficient indiqué par le tableau. Dans un mode de réalisation particulier, on fusionne les indicateurs deux à deux, en commençant par les indicateurs numérotés 1 et 2, puis en fusionnant le produit de cette fusion avec l'indicateur 3, puis en fusionnant le produit de cette nouvelle fusion avec l'indicateur 4, et ainsi de suite, jusqu'à épuisement de tous les indicateurs dont le coefficient de pondération pour la panne concernée n'est pas nul. D'autres mises en oeuvre sont possibles. Le résultat est un indicateur de panne, qui peut indiquer une absence de panne ou une présence de cette panne, avec une certaine intensité et un certain niveau de confiance.

La **figure 7** présente un système de logique floue utilisé dans le module MOD_{FD}- Il comprend un module de fuzzyfication 810 générant un entrée floue à partir d'une entrée nette, un moteur d'inférence 820 générant une sortie floue à partir de l'entrée floue générée par le module de fuzzyfication 810 et enfin un module de défuzzyfication 830 générant une sortie nette à partir de la sortie floue générée par le moteur d'inférence 820. Le moteur d'inférence 820 utilise une base de règles, des combinaisons de prémisses, des implications, et des agrégations de règles floues.

Le système de logique floue constitué des modules 810, 820 et 830 traite, pour un périmètre donné du système complexe surveillé, un certain nombre d'indicateurs de défaut d'entrée (E) (ou flags d'entrée E), qui sont obtenus sous une forme nette. Cette forme nette peut être une forme réelle instantanée indépendante des états antérieurs ou une forme virtuelle ou dynamique incluant d'une manière ou d'une autre les états antérieurs de l'indicateur. Ainsi, pour un instant donné, l'indicateur peut dans le premier cas comprendre essentiellement un message ponctuel unique ou dans le deuxième cas être constitué d'un signal temporel variable possédant une forme de continuité. Bien sûr, une combinaison des deux solutions est possible. La forme nette est obtenue, dans une variante, dans la grille de correspondance G_{CRP} de la figure 6, sur la base des différents messages MSG_{PB} et MSG_{CAP}.

La valeur nette de l'indicateur de défaut est un couple intensité, niveau de confiance, l'intensité (niveau de défaillance) étant choisie par exemple parmi les valeurs « -1 », « 0 », « 1 », « 2 » et « 3 » (signifiant par exemple respectivement, « indisponibilité d'information », « tout va bien », « défaillance minime », « défaillance grave » et « panne »), et le niveau de confiance dans l'intervalle continu [0 ; 1], 0 étant la confiance minimale et 1 la confiance maximale.

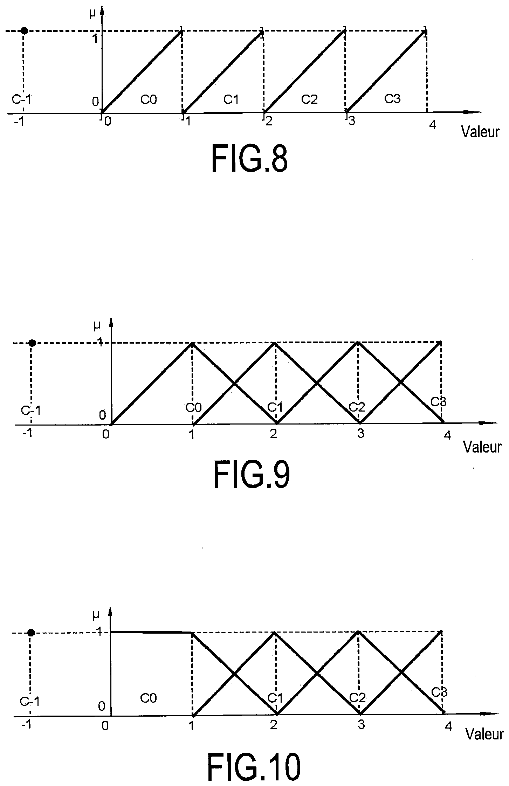

La **figure 8** présente une fonction d'appartenance µ exacte pour les valeurs floues des indicateurs de défauts. La valeur floue de l'indicateur de défaut, produite par le module de fuzzyfication 810 est représentée graphiquement sur la figure. Les classes des variables C-1, C0, C1 à C3 sont également indiquées. Elles ne se recoupent pas. Les valeurs des classes sont constituées de segments ouverts à gauche et fermés à droite (sauf pour la classe -1) conformément au tableau suivant (CL désigne le niveau de confiance).

| Classe floue | Valeur (intensité + CL pour CL ≥ 0 et -1 pour CL = -1) | |
|---|---|---|
| C-1 | Valeur = -1 | avec Y = -1 |
| C0 | Valeur = ]0; 1] | avec Y = ]0;1] |
| C1 | Valeur = ]1; 2] | avec Y = ]0;1] |
| C2 | Valeur = ]2; 3] | avec Y = ]0;1] |
| C3 | Valeur = ]3; 4] | avec Y = ]0;1] |

La **figure 9** présente une fonction d'appartenance µ floue pour les valeurs floues des indicateurs de défauts. Les classes des variables C-1, C0, C1 à C3 sont également indiquées. Les valeurs des classes sont constituées de segments ouverts à gauche et fermés à droite. Les classes C0 à C3 se recouvrent deux à deux conformément au tableau suivant.

| Classe floue | Valeur ( intensité + CL pour CL ≥ 0 et -1 pour CL = -1) | |
|---|---|---|
| C-1 | Valeur = -1 | avec Y = [1] |
| C0 | Valeur = ]0; 1; 2] | avec Y = ]0; 1; 0] |
| C1 | Valeur = ]1; 2; 3] | avec Y = ]0; 1; 0] |
| C2 | Valeur = ]2; 3; 4] | avec Y = ]0; 1; 0] |
| C3 | Valeur = ]3; 4] | avec Y = ]0;1] |

La **figure 10** présente une fonction d'appartenance µ floue basée sur la précédente mais avec renforcement de la classe C0, en conformité avec le tableau suivant

| Classe floue | Valeur (intensité + CL pour CL ≥ 0 et -1 pour CL = -1) | |
|---|---|---|
| C-1 | Valeur = -1 | avec Y = [1] |
| C0 | Valeur = ]0; 1; 2] | avec Y = ]1; 1; 0] |
| C1 | Valeur = ]1; 2; 3] | avec Y = ]0; 1; 0] |
| C2 | Valeur = ]2; 3; 4] | avec Y = ]0; 1; 0] |
| C3 | Valeur = ]3; 4] | avec Y = ]0;1] |

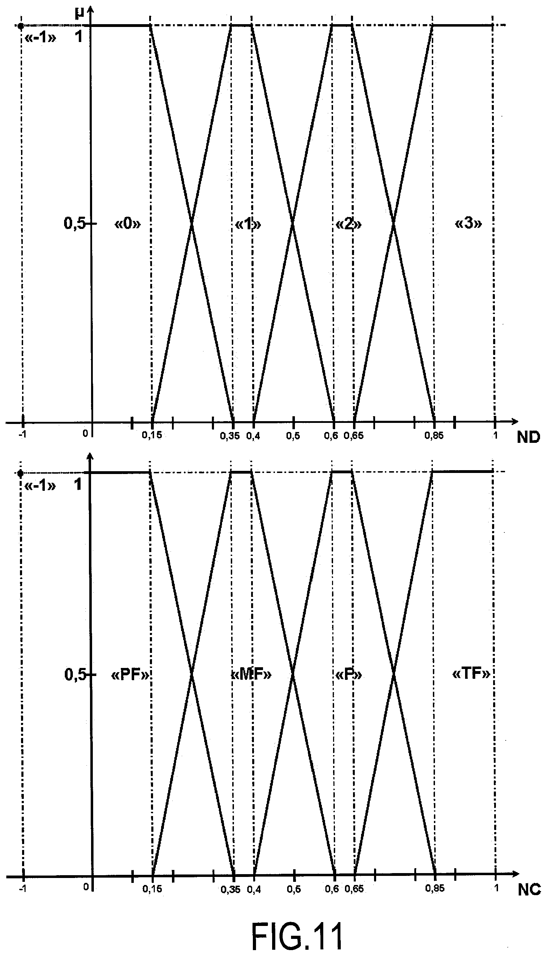

La **figure 11** présente une fonction d'appartenance µ floue basée sur celle de la figure 9 et obtenue en croisant l'intensité (niveau de défaillance) avec le niveau de confiance (fuzzyfication croisée entre ND et NC), suivant les tableaux suivants.

| Intensité (ND) | Classe floue | Valeur |
|---|---|---|
| « information indisponible » | « -1 » | ND = -1 |
| « Tout va bien » | « 0 » | ND = [0; 0.15; 0.35] avec Y = [1;1;0] |
| « Défaillance minime » | « 1 » | ND = [0.15; 0.35; 0.4; 0.6] avec Y = [0;1;1;0] |
| « Défaillance grave » | « 2 » | ND = [0.4; 0.6 0.65; 0.85] avec Y = [0;1;1;0] |
| « Panne » | « 3 » | ND = [0.65; 0.85; 1] avec Y = [0; 1; 1] |

| Niveau de Confiance (NC) | Classe floue | Valeur |
|---|---|---|
| « Information indisponible » | « -1 » | NC = -1 |
| « Peu fiable » | « PF » | NC = [0; 0.15; 0.35] avec Y = [1;1;0] |
| « Moyennement fiable » | « MF» | NC = [0.15; 0.35; 0.4; 0.6] avec Y = [0;1;1;0] |
| « Fiable » | « F » | NC = [0.4; 0.6 0.65; 0.85] avec Y = [0;1;1;0] |
| « Très fiable » | « TF » | NC = [0.65; 0.85; 1] avec Y = [0; 1; 1] |

Pour l'inférence mise en œuvre par le moteur 820, la méthode de Mamdani et la méthode de Larsen peuvent être utilisées. Une base de règles, issue des analyses des modes de défaillance, de leurs effets et de leur criticité (AMDEC) et complétée d'informations de retour d'expérience (REX) est utilisée. Des exemples de règles ainsi mises en oeuvre sont les suivantes : si un seul indicateur de défaut est activé, alors l'indicateur fusionné est identique à l'indicateur d'entrée ; plusieurs indicateurs de défaut activés peuvent être fusionnés ; les règles des combinaisons peuvent contenir des « ET », des « OU », ou les deux à la fois. Un exemple de règles exactes est donné dans le tableau suivant.

| **Flag fusionné** | | **Flag 1** | | | | |
|---|---|---|---|---|---|---|
| | | **"-1"** | **"0"** | **"1"** | **"2"** | **"3"** |
| **Flag 2** | **"-1"** | "-1" | "-1" | "-1" | "-1" | "-1" |
| | **"0"** | "-1" | "0" | "0" | "-1" | "1" |
| | **"1"** | "-1" | "0" | "1" | "1" | "2" |
| | **"2"** | "-1" | "1" | "1" | "2" | "3" |
| | **"3"** | "-1" | "1" | "2" | "3" | "3" |

Si les règles simultanément activées sont liées par un opérateur OU, l'agrégation des règles peut être réalisée par l'opérateur maximum *µ_{B}*(*y*) =*MAX*[*µ_{Bᵢ}*(*y*)] *i*∈{*indices des régles activées*}, et si les règles simultanément activées sont liées par un opérateur ET, l'agrégation peut être réalisée par l'opérateur minimum *µ_{B}*(*y*) = *MIN*[*µ_{Bᵢ}*(*y*)] *i*∈{*indices des règles activées*}

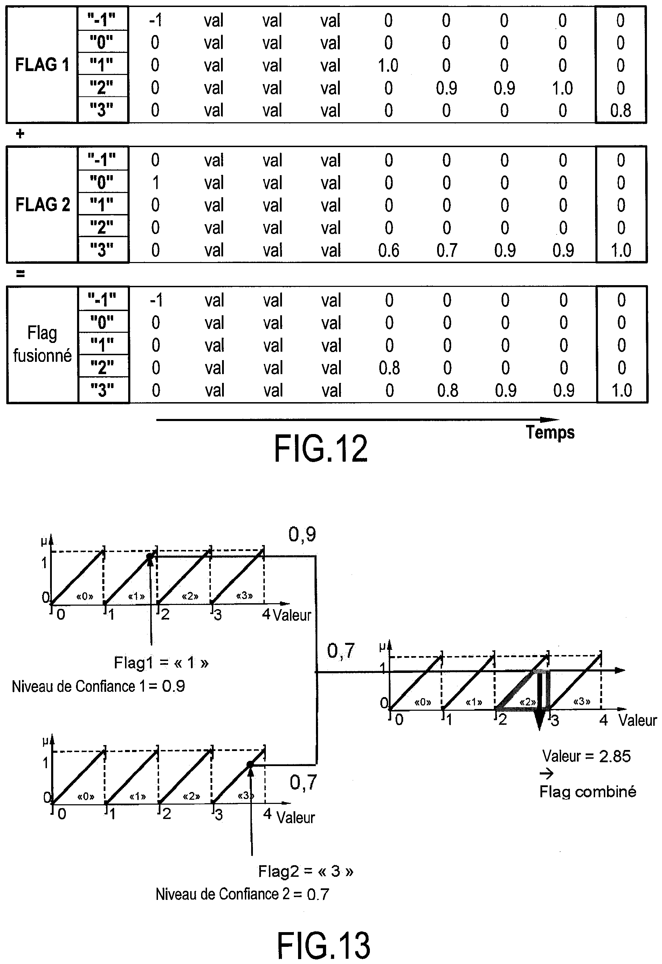

En **figures 12 et 13****,** on a représenté un mode de réalisation de la fusion d'indicateurs de défauts mise en oeuvre par le moteur d'inférence 820, dans le cas d'une fonction d'appartenance exacte (figure 8), et de règles exactes de combinaison telles que présentées dans le tableau ci-dessus. On présente en figure 12 un exemple dans lequel, à l'instant encadré, un premier indicateur à l'intensité 3 avec un niveau de confiance de 0.8, un deuxième indicateur à la intensité 3 avec un niveau de confiance de 1. Les règles exactes présentées au tableau ci-dessus donnent un résultat de fusion qui constitue un indicateur de panne d'intensité 3, avec un niveau de confiance de 1.

Un autre exemple est donné en **figure 13** avec un indicateur d'intensité 1 et de niveau de confiance 0.9, soit une valeur floue de 1.9 et un deuxième indicateur d'intensité 3 avec un niveau de confiance égal à 0.7 et une valeur floue de 3.7. La valeur floue produite est de 2.85, obtenue en faisant la moyenne de 1.9 et 3.7. La méthode utilisée est celle de Mamdani avec l'opérateur Min pour la combinaison des prémisses et pour l'implication des règles.

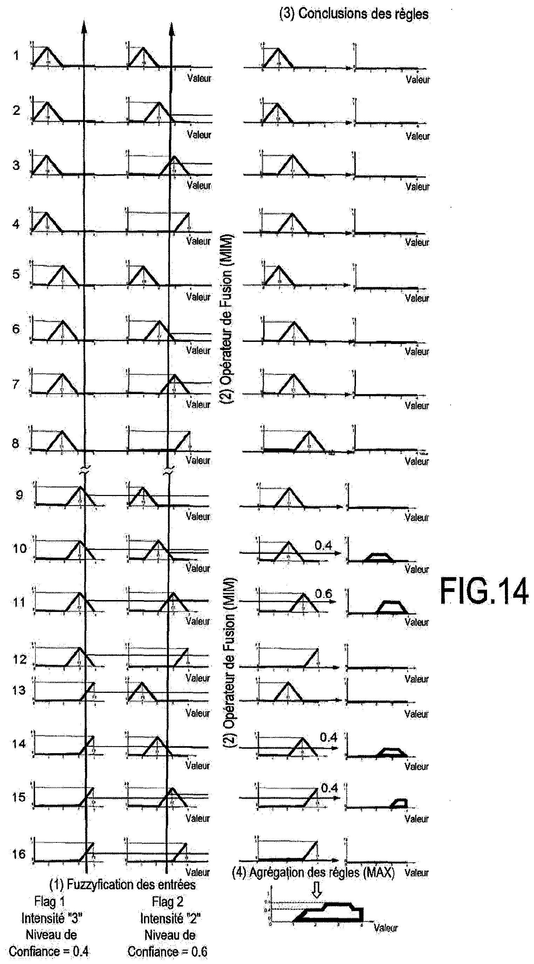

En **figure 14****,** on a représenté un exemple de mis en oeuvre d'un mode de réalisation de la fusion d'indicateurs de défauts mise en oeuvre par le moteur d'inférence 820, dans le cas d'une fonction d'appartenance floue (telle que présentée en figure 9) et des règles exactes du tableau ci-dessus. On déploie le processus de fusion pour toutes les règles, sauf pour les règles comprenant l'intensité -1. On présente ici un exemple avec un indicateur d'intensité 3 et de niveau de confiance 0.4, et un deuxième indicateur d'intensité 2 avec un niveau de confiance égal à 0.6. Les valeurs floues des deux indicateurs ont 16 composantes, et on obtient par la fusion, un indicateur flou à 16 composantes. Il est ici agrégé par l'opérateur maximum.

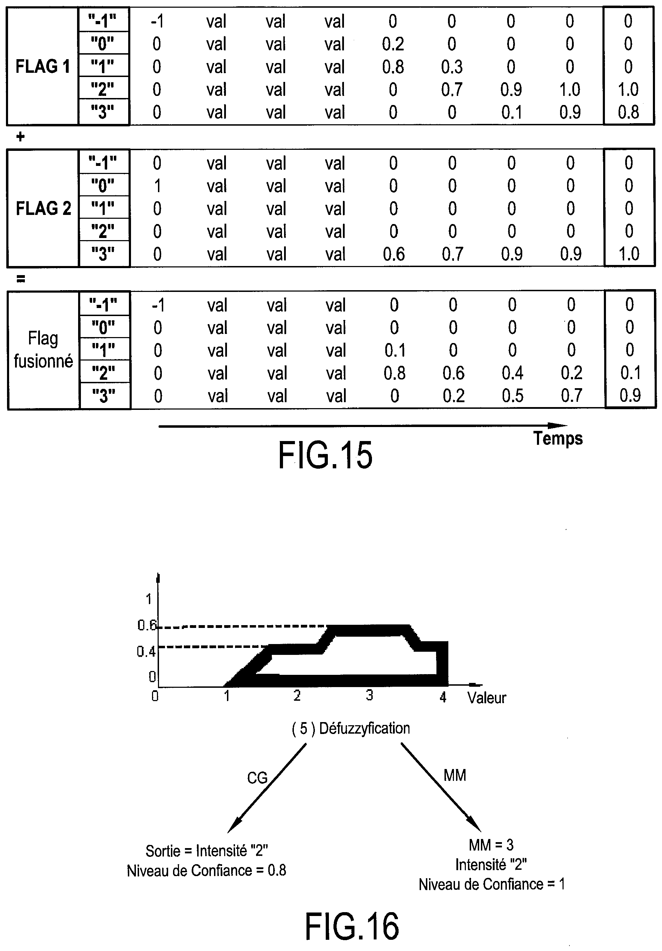

En **figure 15****,** on a représenté un exemple de mis en oeuvre d'un mode de réalisation de la fusion d'indicateurs de défauts mise en oeuvre par le moteur d'inférence 820, dans le cas d'une fonction d'appartenance floue (telle que présentée en figure 9) et des règles floues présentées dans le tableau suivant.

| **Flag fusionné** | | **Flag 1** | | | | |
|---|---|---|---|---|---|---|
| | | **"-1"** | **"0"** | **"1"** | **"2"** | **"3"** |
| **Flag 2** | **"-1"** | "-1" | "-1" | "-1" | "-1" | "-1" |
| | **"0"** | "-1" | "0" | "0" | "0"/"1" | "1" |
| | **"1"** | "-1" | "0" | "1" | "1" | "2" |
| | **"2"** | "-1" | "0"/"1" | "1 "/"2" | "2"/"3" | "2"/"3" |
| | **"3"** | "-1" | "1" | "2" | "2"/"3" | "3" |

On présente ici un exemple à l'instant encadré (figure 15), un premier indicateur à l'intensité 2 avec un niveau de confiance de 1 et simultanément à l'intensité 3 avec un niveau de confiance de 0.8. Un deuxième indicateur est à l'intensité 3 avec un niveau de confiance de 1, les autres intensités étant inactives. Les règles floues présentées au tableau ci-dessus donnent un résultat de fusion qui constitue un indicateur d'intensité 3, avec un niveau de confiance de 0.9 et un indicateur d'intensité 2, avec un niveau de confiance de 0.1.

Le module de défuzzyfication 830 produit une valeur nette sur la base de la valeur floue produite précédemment. Dans le cas du scénario présenté en figure 13, la moyenne des maxima (MM) est utilisée pour obtenir un indicateur fusionné net. Il a dans l'exemple présenté la valeur d'intensité 2 et un niveau de confiance de 0.85. Dans le cas du scénario représenté en figure 14, deux possibilités alternatives sont utilisées, et elles sont présentées en **figure 16****.** La première est la méthode du centre de gravité (CG) qui conduit à une intensité de 2 avec un niveau de confiance de 0.8, et la deuxième est la méthode de la moyenne des maxima qui conduit à une intensité de 2 avec un niveau de confiance de 1.

L'invention trouve des applications dans des domaines différents de celui présenté ici, dans lequel le système complexe concerné est un moteur de fusée.

Un premier exemple constitue un processus de prise de décision pour une alerte portant sur un phénomène naturel comme une inondation. Le système complexe est constitué par une région, avec son atmosphère, ses cours d'eau et ses nappes phréatiques.

Une première information d'état peut être relative à des observations météorologiques associées à un indicateur de confiance, et une pluviométrie attendue, déduite de ces observations météorologiques, associée à son indicateur de confiance.

Une seconde information d'état peut être relative au niveau d'une nappe phréatique, associé à son indicateur de confiance.

Une troisième information d'état peut être relative au sens des vents, associé à nouveau à son indicateur de confiance.

La panne représente ici une inondation et l'information de panne est associée à un niveau de confiance, produit selon les principes de l'invention.

Un deuxième exemple porte sur un processus d'alerte épidémiologique, par exemple pour la grippe. Le système complexe est une population humaine.

Une première information d'état est relative au niveau (fort, moyen ou faible) de propagation de la grippe et est associée à un niveau de confiance.

Une seconde information d'état est relative à la vulnérabilité (haute, moyenne ou faible) des personnes sensibles (personnes âgées par exemple), et est associée à un niveau de confiance. On rappelle que cette vulnérabilité varie en fonction d'autres paramètres, comme par exemple la météo.

Une troisième information d'état est relative à l'efficacité (très bonne, satisfaisante ou médiocre) des traitements disponibles, et elle est à nouveau associée à un niveau de confiance.

L'information de panne indique ici l'insuffisance des mesures habituelles de protection de la population, et elle est associée à un niveau de confiance. Sur la base de cette information, les autorités sont éventuellement amenées à prendre des mesures extraordinaires de protection de la population.

Un autre exemple porte sur une application dans le nucléaire, et plus précisément une prise de décision dans le cadre d'une maintenance d'une installation de type centrale électronucléaire.

Une première information d'état porte sur un niveau de choc thermique ou un niveau intégré dans le temps représentatif d'un niveau cumulé de choc thermique, les chocs thermiques étant issus de transitoires. Cette première information est associée à un indicateur de confiance.

Une seconde information représente un niveau de dégradation de la ductilité du métal, le niveau étant issu de calculs de modèles utilisant des observations auxquelles il est associé un indicateur de confiance.

L'information de panne porte sur la panne du système surveillé et est associée à un niveau de confiance, permettant d'instruire une démarche de maintenance.

L'invention a été décrite en relation avec des modes de réalisation qui ne sont pas limitatifs, et elle s'étend à toutes les variantes dans la limite de la portée des revendications.

## Revendications

1. Système de traitement de données (MOD_{FD}) pour la surveillance d'un système complexe, le système de traitement étant configuré pour recevoir des informations d'état (ID_{FLAG}, MSG_{PB}, MSG_{CAP}) et fusionner au moins lesdites informations d'état en une information de panne (MSG_{PC}), au moins une desdites informations d'état étant associée à un indicateur de confiance (NC2), et l'information de panne étant également associée à un indicateur de confiance (NC3), dans lequel une fusion est effectuée en mettant en oeuvre une technique de logique floue pour produire l'information de panne en tenant compte des indicateurs de confiance (NC2) respectifs des informations d'état et produire l'indicateur de confiance (NC3) associé à l'information de panne, et les informations d'état sont reçues dans des messages d'état comprenant l'identification d'un sous-système (ID_{SS}) ou d'un composant (ID_{COMP}).

2. Système de traitement de données selon la revendication 1, dans lequel on utilise des règles exactes de combinaison des informations d'état (Fig. 12-14), ou des règles floues de combinaison des informations d'état (Fig. 15).

3. Système de traitement de données selon la revendication 1 ou la revendication 2, dans lequel une fuzzyfication des informations d'état est effectuée avec une fonction d'appartenance exacte (Fig. 8), une fonction d'appartenance floue (Fig. 9), une fonction d'appartenance pour laquelle une classe est renforcée par rapport aux autres (Fig. 10), ou une fonction d'appartenance pour laquelle une intensité de l'information d'état est croisée avec un niveau de confiance (Fig. 11).

4. Système de traitement selon l'une des revendications 1 à 3, dans lequel une inférence est mise en œuvre avec la méthode de Mamdani (Fig. 12 - 15) ou la méthode de Larsen.

5. Système de traitement selon l'une des revendications 1 à 4, dans lequel les règles sont agrégées avec l'opérateur maximum (MAX) ou l'opérateur minimum (MIN).

6. Système de traitement de données selon l'une des revendications 1 à 5, dans lequel une défuzzyfication est effectuée avec la méthode de la moyenne des maxima (MM) ou la méthode du centre de gravité (CG).

7. Système de traitement de données selon l'une des revendications 1 à 6, dans lequel les informations d'état sont reçues dans des messages d'état comprenant une date (DATE).

8. Système de traitement de données selon l'une des revendications 1 à 7, dans lequel une intensité est associée à l'information d'état.

9. Méthode de traitement de données (MOD_{FD}) pour la surveillance d'un système complexe comprenant une réception d'informations d'état (MSG_{PB}, MSG_{CAP}) et une fusion d'au moins lesdites informations d'état en une information de panne (MSG_{PC}), au moins une desdites informations d'état étant associée à un indicateur de confiance (NC2), et l'information de panne étant également associée à un indicateur de confiance (NC3), dans lequel une fusion est effectuée en mettant en oeuvre une technique de logique floue pour produire l'information de panne en tenant compte des indicateurs de confiance (NC2) respectifs des informations d'état et produire l'indicateur de confiance (NC3) associé à l'information de panne, et les informations d'état sont reçues dans des messages d'état comprenant l'identification d'un sous-système (ID_{SS}) ou d'un composant (ID_{COMP}).

## Patentansprüche

1. Datenverarbeitungssystem (MOD_{FD}) für die Überwachung eines komplexen Systems, wobei das Verarbeitungssystem dazu ausgelegt ist, Zustandsinformationen (ID_{FLAG}, MSG_{PB}, MSG_{CAP}) zu empfangen und wenigstens die Zustandsinformationen zu einer Ausfallinformation (MSG_{PC}) zu verschmelzen, wobei wenigstens eine der Zustandsinformationen einem Vertrauensindikator (NC2) zugeordnet ist, und wobei die Ausfallinformation ebenfalls einem Vertrauensindikator (NC3) zugeordnet ist, wobei eine Verschmelzung dadurch vollzogen wird, dass eine Fuzzy-Logik-Technik eingesetzt wird, um die Ausfallinformation unter Berücksichtigung der jeweiligen Vertrauensindikatoren (NC2) der Zustandsinformationen zu erzeugen und um den der Ausfallinformation zugeordneten Vertrauensindikator (NC3) zu erzeugen, und die Zustandsinformationen in Zustandsnachrichten, welche die Identifizierung eines Subsystems (ID_{SS}) oder einer Komponente (ID_{COMP}) umfassen, empfangen werden.

2. Datenverarbeitungssystem nach Anspruch 1, bei dem exakte Regeln zur Kombination der Zustandsinformationen (Fig. 12-14) oder Fuzzy-Regeln zur Kombination der Zustandsinformationen (Fig. 15) verwendet werden.

3. Datenverarbeitungssystem nach Anspruch 1 oder Anspruch 2, bei dem eine Fuzzifizierung der Zustandsinformationen mit einer exakten Zugehörigkeitsfunktion (Fig. 8), einer Fuzzy-Zugehörigkeitsfunktion (Fig. 9), einer Zugehörigkeitsfunktion, für die eine Klasse gegenüber den anderen verstärkt ist (Fig. 10), oder einer Zugehörigkeitsfunktion, für die eine Intensität der Zustandsinformation mit einem Konfidenzniveau gekreuzt wird (Abb. 11), durchgeführt wird.

4. Verarbeitungssystem nach einem der Ansprüche 1 bis 3, bei dem eine Inferenz mit der Mamdani-Methode (Fig. 12 - 15) oder der Larsen-Methode durchgeführt wird.

5. Verarbeitungssystem nach einem der Ansprüche 1 bis 4, bei dem die Regeln mit dem Maximaloperator (MAX) oder dem Minimaloperator (MIN) aggregiert sind.

6. Datenverarbeitungssystem nach einem der Ansprüche 1 bis 5, bei dem eine Defuzzifizierung mit der Methode des Mittelwerts der Maxima (MM) oder der Schwerpunkt-Methode (CG) durchgeführt wird.

7. Datenverarbeitungssystem nach einem der Ansprüche 1 bis 6, bei dem die Zustandsinformationen in Zustandsnachrichten mit einem Datum (DATE) empfangen werden.

8. Datenverarbeitungssystem nach einem der Ansprüche 1 bis 7, bei dem der Zustandsinformation eine Intensität zugeordnet ist.

9. Datenverarbeitungsverfahren (MOD_{FD}) für die Überwachung eines komplexen Systems, das einen Empfang von Zustandsinformationen (MSG_{PB}, MSG_{CAP}) und ein Verschmelzen von wenigstens den Zustandsinformationen zu einer Ausfallinformation (MSG_{PC}) umfasst, wobei wenigstens eine der Zustandsinformationen einem Vertrauensindikator (NC2) zugeordnet ist, und wobei die Ausfallinfcrmation ebenfalls einem Vertrauensindikator (NC3) zugeordnet ist, wobei eine Verschmelzung dadurch vollzogen wird, dass eine Fuzzy-Logik-Technik eingesetzt wird, um die Ausfallinformation unter Berücksichtigung der jeweiligen Vertrauensindikatoren (NC2) der Zustandsinformationen zu erzeugen und um den der Ausfallinformation zugeordneten Vertrauensindikator (NC3) zu erzeugen, und die Zustandsinformationen in Zustandsnachrichten, welche die Identifizierung eines Subsystems (ID_{SS}) oder einer Komponente (ID_{COMP}) umfassen, empfangen werden.

## Claims

1. A data processor system (MOD_{FD}) for monitoring a complex system, the processor system being configured to receive pieces of state information (ID_{FLAG}, MSG_{PB}, MSG_{CAP}) and to merge at least said pieces of state information into a piece of failure information (MSG_{PC}), at least one of said pieces of state information being associated with a confidence flag (NC2), and the piece of failure information likewise being associated with a confidence flag (NC3), wherein a merging is performed by implementing a fuzzy logic technique in order to produce the piece of failure information while taking account of the respective confidence flags (NC2) of the pieces of state information and in order to produce the confidence flag (NC3) associated with the failure information, and wherein the pieces of state information are received in state messages including the identity of a subsystem (ID_{SS}) or of a component (ID_{COMP}).

2. A data processor system according to claim 1, wherein exact rules are used for combining the pieces of state information (Figures 12-14), or fuzzy rules are used for combining the pieces of state information (Figure 15).

3. A data processor system according to claim 1 or claim 2, wherein the state information is subjected to fuzzyfication with an exact belonging function (Figure 8), a fuzzy belonging function (Figure 9), a belonging function in which one class is strengthened relative to the others (Figure 10), or a belonging function in which a magnitude of the state information is cross-tabulated with a confidence level (Figure 11).

4. A processor system according to any one of claims 1 to 3, wherein inference is performed using Mamdani's method (Figures 12-15) or Larsen's method.

5. A processor system according to any one of claims 1 to 4, wherein the rules are aggregated with the maximum operator (MAX) or the minimum operator (MIN).

6. A data processor system according to any one of claims 1 to 5, wherein defuzzyfication is performed using the method of averaging the maximums (MM) or the center of gravity method (CG).

7. A data processor system according to any one of claims 1 to 6, wherein the pieces of state information are received in state messages including a time stamp (DATE).

8. A data processor system according to any one of claims 1 to 7, wherein each piece of state information is associated with a magnitude.

9. A data processing method (MOD_{FD}) for monitoring a complex system, the method comprising receiving pieces of state information (MSG_{PB}, MSG_{CAP}) and merging at least one of said pieces of state information into a piece of failure information (MSG_{PC}), at least one of said pieces of state information being associated with a confidence flag (NC2), and the piece of failure information also being associated with a confidence flag (NC3), the method being **characterized in that** merging is performed by implementing a fuzzy logic technique in order to produce a piece of failure information while taking account of the respective confidence flags (NC2) of the pieces of state information and in order to produce the confidence flag (NC3) associated with the piece of failure information, and wherein the pieces of state information are received in state messages including the identity of a subsystem (ID_{SS}) or of a component (ID_{COMP}).
